# EUROPÄISCHE PATENTSCHRIFT

(11) **EP 1 129 318 B1**
(45) Veröffentlichungstag und Bekanntmachung des Hinweises auf die Patenterteilung: **20.08.2003**
(21) Anmeldenummer: 98952487.1
(22) Anmeldetag: 12.11.1998
(51) Int. Cl.: F21V 7/22, G02B 5/08, G02B 1/10

(54) **REFLEKTOR MIT RESISTENTER OBERFLÄCHE**
REFLECTOR WITH A RESISTANT SURFACE
REFLECTEUR A SURFACE RESISTANTE

(43) Veröffentlichungstag der Anmeldung: 05.09.2001
(73) Patentinhaber: Alcan Technology & Management AG, 8212 Neuhausen am Rheinfall (CH); Alanod Aluminium-Veredlung GmbH & Co., 58240 Ennepetal (DE)
(72) Erfinder: GILLICH, Volkmar, CH-8212 Neuhausen am Rheinfall (CH); KIRIN, Renato, CH-8240 Thayngen (CH); FUCHS, Roman, CH-8200 Schaffhausen (CH)
(86) Internationale Anmeldenummer: CH9800489
(87) Internationale Veröffentlichungsnummer: WO00029784

(56) Entgegenhaltungen:
- EP-A- 0 456 488
- EP-A- 0 714 039
- BE-A- 1 007 299
- US-A- 5 583 704

## Beschreibung

Vorliegende Erfindung betrifft einen gegen mechanische Angriffe resistenten Reflektor mit hoher Gesamtreflexion gemäss dem Oberbegriff von Anspruch 1.

Die Erfindung betrifft weiter die Verwendung solcher Reflektoren.

Es ist allgemein bekannt, Bänder in Glänzwerkstoffen, z.B. Reinstaluminium oder AlMg-Legierungen auf Basis von Aluminium mit einem Reinheitsgrad von 99,8 % und grösser, wie z.B. 99,9 %, und Walzoberflächen, die diffuse oder gerichtete Lichtreflexion erzeugen, je nach Anwendung, herzustellen. Es ist auch bekannt, zur Erhöhung der gerichteten Reflexion (Glanzgrad) die Oberflächen von solchen Bändern chemisch oder elektrolytisch zu glänzen und anschliessend durch atrodische Oxidation eine Schutzschicht von z.B. 1,5 µm Schichtdicke zu erzeugen.

Die bekannten Verfahren haben den weiteren Nachteil, dass hochreine und teure Glänzlegierungen auf Basis von Reinstaluminium eingesetzt werden müssen. Durch die anodische Oxidschicht sinkt der Reflexionsgrad der Oberfläche und dabei sowohl die Gesamtreflexion wie auch die gerichtete Reflexion durch Absorption und diffuse Lichtstreuung, insbesondere in der Oxidschicht. Dies bedeutet einen Energieverlust.

Aus der EP-A-0 495 755 sind Gegenstände mit Oberflächen aus Aluminium bekannt geworden, welche geeignet sind für die Abscheidung von Schichtsystemen aus der Gasphase auf diesen Oberflächen. Auf eine Anodisierung der Oberflächen wird verzichtet, und es wird ein Schichtsystem aus beispielsweise einer Haftschicht, wie einer Keramikschicht, einer Lichtreflexionsschicht, wie einer metallischen Schicht, z.B. aus Aluminium, und einer oder mehreren transparenten Schutzschichten aus beispielsweise den Oxiden, Nitriden oder Fluoriden des Magnesiums, des Titans oder des Praesodyms beschrieben. Solche Schichtsysteme weisen einen hohen Reflexionsgrad auf. Ein derartiges Schichtsystem hat jedoch den Nachteil, dass die Oberfläche sehr empfindlich auf mechanischen Einfluss ist.

Die EP-A-0 568 943 beschreibt die Abscheidung einer Reflexionsschicht auf einer Basisschicht aus Aluminium und einem darüberliegenden Gel-Film, welcher durch ein Sol-Gel-Verfahren auf dem Aluminium abgeschieden worden ist. Die Reflexion wird durch ein Schichtsystem aus den Schichten Siliciumdioxid, Metall, Siliciumdioxid und Titandioxid erreicht. Auch dies ist eine Möglichkeit, zu reflektierenden Aluminiummaterialien zu gelangen. Der in der EP-A 0 568 943 beschriebene Schichtaufbau ist gegen mechanische Beanspruchung nicht in gewünschtem Masse resistent.

Aus der BE-A-1 007 299 ist ein Reflektor des wesentlichen Aufbaues: Eine Aussenschicht aus Acrylharz mit bestimmtem Abrasionswiderstand, eine Kunststoffkernschicht und eine die Strahlung reflektierende Schicht bekannt. Gegebenenfalls kann unter der reflektierenden Schicht eine druckempfindliche Klebstoffschicht und eine flache Trägerplatte vorgesehen werden.

Die US-A-5 583 704 nennt ein Kunstharzsubstrat und darauf angeordnet eine Unterzugsschicht aus SiO₂ und eine reflektierende Schicht, die ihrerseits von drei schützenden Schichten überschichtet ist.

Gemäss der EP-A-0 456 488 wird die reflektierende Schicht direkt auf dem Substrat angeordnet.

Aufgabe vorliegender Erfindung ist es, die genannten Nachteile zu vermeiden und Reflektoren vorzuschlagen, deren reflektierende Schicht gegen äussere mechanische Einwirkungen unempfindlich ist und die sich durch eine hohe Wischbeständigkeit auszeichnet.

Erfindungsgemäss wird dies durch einen Reflektor gemäss Anspruch 1 erreicht.

Sinngemäss zählt in vorliegender Erfindung die Schutzschicht zu den transparenten Schichten innerhalb der Reflexionsschichtenfolge.

In einer zweckmässigen Ausführungsform beträgt die minimale Dicke der Schutzschicht 3 nm. Die maximale Dicke der Schutzschicht kann beispielsweise 1000 nm und vorteilhaft 400 nm betrgen. In anderer Ausführungsform beträgt die Dicke der Schutzschicht bevorzugt 40 nm oder weniger. Insbesondere beträgt die Dicke der Schutzschicht 3 bis 20 nm. In vorliegender Erfindungsbeschreibung hat nm die Bedeutung von Nanometer.

In weiterer Ausführungsform kann die Dicke der Schutzschicht auch durch ihre optische Dicke definiert werden. Vorzugsweise folgt die optische Dicke der Formel: n • d = λ/2 ± 40 nm. Die optische Dicke kann auch ein Vielfaches davon sein, ausgedrückt durch k, wobei k eine natürliche Zahl, wie 2, 3, 4, 5, 6, 7, 8, 9 oder 10, sein kann. In diesen Formeln hat n hat die Bedeutung des Brechungsindex und d der geometrischen Dicke. λ entspricht dem Intensitätsmaximum der Wellenlänge der reflektierten elektromagnetischen Strahlung. Beim sichtbaren Licht liegt λ im Bereich um 550 nm.

Als Reflektorkörper können alle räumlichen Gebilde, die wenigstens eine freie Oberfläche aus einem Metall, wie Eisen, Stahl, Aluminium oder Aluminiumlegierung, oder aus Kunststoff oder aus Keramik oder aus Glas aufweisen, zur Anwendung gelangen. Diese freie Oberfläche kann beispielsweise ein Aluminium mit einer Reinheit von 98,3 % und höher, fallweise auch mit einer Reinheit von beispielsweise 99,0 % und höher, 99,7 % und höher, 99,9 % und höher oder 99,95 % und höher sein. Neben Aluminium genannter Reinheiten kann die Oberfläche auch eine Legierung darstellen. Bevorzugte Legierungen sind diejenigen der Klassen AA 1000, AA 3000 und AA 5000. Weitere bevorzugte Legierungen enthalten beispielsweise 0,25 bis 5 Gew.-%, insbesondere 0,5 bis 4 Gew.-% Magnesium oder enthaltend 0,2 bis 2 Gew.-% Mangan oder enthaltend 0,5 bis 5 Gew.-% Magnesium und 0,2 bis 2 Gew.-% Mangan, insbesondere z.B. 1 Gew.-% Magnesium und 0,5 Gew.-% Mangan oder enthaltend 0,1 bis 12 Gew.-%, vorzugsweise 0,1 bis 5 Gew.-% Kupfer oder enthaltend 0,5 bis 6 Gew.-% Zink und 0,5 bis 5 Gew.-% Magnesium oder enthaltend 0,5 bis 6 Gew.-% Zink, 0,5 bis 5 Gew.-% Magnesium und 0,5 bis 5 Gew.-% Kupfer oder enthaltend 0,5 bis 2 Gew.-% Eisen und 0,2 bis 2 Gew.-% Mangan, insbesondere z.B. 1,5 Gew.-% Eisen und 0,4 Gew.-% Mangan oder AlMgSi-Legierungen oder AlFeSi-Legierungen.Weitere Beispiele sind AlMgCu-Legierungen, wie A199,85MgO,8Cu oder AlMg-Legierungen, wie AlMg1.

Besonders bevorzugte freie Oberflächen sind beispielsweise aus Aluminium mit einer Reinheit von 99,5 % und höher, 99,8 % und höher, 99,85 % oder Oberflächen aus einer Aluminiumlegierung, enthaltend 0,5 Gew.-% Magnesium oder enthaltend 1 Gew.-% Magnesium oder enthaltend Aluminium einer Reinheit von 99 % und 5 bis 10, insbesondere 7 Gew.-% Magnesium und 6 bis 12 und insbesondere 8 Gew.-% Kupfer. Besonders bevorzugt sind auch alle Aluminium-Legierungen, die walzbar sind.

Beispiele von Reflektorkörpern sind Guss- und Schmiedeteile und insbesondere Walzprodukte, wie Folien, Bänder, Platten, Bleche, die gegebenenfalls durch Biegen, Tiefziehen, Kaltfliesspressen und dergleichen umgeformt sein können. Ferner können Profile, Balken oder andere Formen angewendet werden. Je nach Einsatzzweck kann der ganze Reflektorkörper aus dem Metall und vorzugsweise dem genannten Aluminium oder der Aluminiumlegierung sein, es können aber auch nur Teilbereiche oder Oberflächenbereiche daraus bestehen.

Das genannte Metall und insbesondere das Aluminium oder die Aluminiumlegierung, kann auch Teil oder Teiloberfläche eines Verbundes darstellen, z.B. eines Folienverbundes oder Laminates beliebiger Werkstoffe, wie z.B. aus Kunststoffen und Metallen, wie AI-beschichtetes Eisen- oder Stahlblech oder Al-beschichteter Kunststoff.

Die Metall- resp. Aluminiumoberflächen können beispielsweise durch chemische und/oder mechanische Veränderung der Oberfläche, wie z.B. Walzen, Schmieden, Kaltfliesspressen, Pressen oder Giessen erzeugt werden und eine Nachbehandlung durch Schleifen, Polieren, Strahlen mit Hartstoffen usw. kann sich anschliessen. Bevorzugt sind Walzoberflächen, die mit glatten oder strukturierten Walzen erzeugt werden.

Bevorzugt als Reflektorkörper sind Aluminiumbleche oder Al-beschichtetes Eisen- oder Stahlblech in einer Dicke von beispielsweise 0,2 bis 0,8 mm, zweckmässig 0,3 bis 0,7 mm und vorzugsweise 0,4 - 0,5 mm. Ein Beispiel ist ein A4-Aluminiumblech Al 99,5 (Reinheit 99,5%) der Dicke von 0,5 mm.

Die Aluminiumoberflächen können auch einem chemischen oder elektrochemischen Glänzverfahren oder einem alkalischen Beizprozess unterzogen werden. Solche Glänz- oder Beizverfahren werden vor dem Anodisieren angewendet.

Die Aluminiumoberflächen können bei beliebiger Topographie eine Oberflächenrauhigkeit Rₐ von beispielsweise 0,01 bis 5 µm und bevorzugt von 0,01 bis 0,5 µm aufweisen. Weitere vorteilhafte bevorzugte Rauhigkeiten Rₐ sind von 0,01 bis 0,4 µm und insbesondere von 0,03 bis 0,06 µm, wobei 0,04 µm ganz besonders geeignet ist. Die Oberflächenrauhigkeit Rₐ ist definiert in wenigstens einer der DIN-Vorschriften 4761 bis 4768.

Beim vorliegenden Reflektor können zwischen dem Reflektorkörper und der funktionellen Beschichtung a) wenigstens eine Vorbehandlungsschicht angeordnet sein.

Die Vorbehandlungsschicht kann im Falle eines Reflektorkörpers aus einem vorwiegend eisenhaltigen Metall eine durch Phosphatierung, Chromatierung oder durch Verzinken erzeugte Schicht sein. Die Vorbehandlungsschicht kann im Falle eines Reflektorkörpers aus Aluminium beispielsweise eine durch Chromatierung, Phosphatierung oder durch anodische Oxidation erzeugte Schicht sein. Vorzugsweise ist die Vorbehandlungsschicht aus anodisch oxidiertem Aluminium und wird insbesondere direkt aus dem an der Oberfläche des Reflektorkörpers liegenden Aluminium erzeugt. Die Vorbehandlungsschicht kann eine Dicke von beispielsweise wenigstens 10 nm, zweckmässig 20 nm, besonders zweckmässig wenigstens 50 nm, bevorzugt von wenigstens 100 nm und besonders bevorzugt von wenigstens 150 nm aufweisen. Die grösste Dicke der Vorbehandlungsschicht kann beispielsweise 1500 nm und bevorzugt 200 nm betragen. Somit weist die Vorbehandlungsschicht bevorzugt eine Dicke von 100 nm bis 200 nm auf.

Beispielsweise kann die Vorbehandlungschicht eine anodisch erzeugte Oxidschicht sein, die in einem rücklösenden oder nicht rücklösenden Elektrolyten aufgebaut wurde. Die Vorbehandlungschicht kann auch eine Gelbchromatierschicht, eine Grünchromatierschicht, eine Phosphatschicht oder eine chromfreie Vorbehandlungschicht, die in einem Elektrolyten, enthaltend wenigstens eines der Elemente Ti, Zr, F, Mo oder Mn, aufgewachsen ist, enthalten.

Auf den Reflektorkörper direkt, oder -- falls vorhanden -- auf die Vorbehandlungsschicht, wird die funktionelle Beschichtung a) aufgebracht. Alternativ bildet im Falle einer anodischen Oxidation die durch die anodische Oxidation gebildete Aluminiumoxidschicht die funktionelle Beschichtung a).

Beispielsweise weist die funktionelle Beschichtung a) eine Dicke von 0,5 bis 20 µm, zweckmässig von 1 bis 20 µm, bevorzugt von 2 bis 10 µm und besonders bevorzugt von 2 bis 5 µ m auf. Stellt die durch die anodische Oxidation gebildete Aluminiumoxidschicht die funktionelle Beschichtung a) dar, ist deren Dicke, wie oben erwähnt, von 20 bis 1500 nm.

Die funktionelle Beschichtung a) ist alternativ ein Gel-Film, der nach einem Sol-Gel-Verfahren aufgetragen wird, sein.

Der Gel-Film ist eine Beschichtung mit organofunktionellen Silanen einer Metailverbindung und kann beispielsweise
A) durch hydrolytische Kondensation von folgenden Komponenten erhalten worden sein, gegebenenfalls in Gegenwart eines Kondensationskatalysators und/oder üblichen Additiven:
   1. mindestens einem vernetzbaren organofunktionellen Silan der Formel (II):

      R'''ₘSiX₍₄₋ₘ₎ (II)

      in der die Gruppen X, die gleich oder verschieden sein können, Wasserstoff, Halogen, Alkoxy, Acyloxy, Alkylcarbonyl, Alkoxycarbonyl oder -NR" ₂ (R" = H und /oder Alkyl) bedeuten und die Reste R''', die gleich oder verschieden sein können, Alkyl, Alkenyl, Alkinyl, Aryl, Arylalkyl, Alkylaryl, Arylalkenyl, Alkenylaryl, Arylalkinyl oder Alkinylaryl darstellen, wobei diese Reste durch O- oder S- Atome oder die Gruppe -NR" unterbrochen sein können und einen oder mehrere Substituenten aus der Gruppe der Halogene und der gegebenenfalls substituierten Amino-, Amid-, Aldehyd-, Keto-, Alkylcarbonyl-, Carboxy-, Mercapto-, Cyano-, Hydroxy-, Alkoxy-, Alkoxycarbonyl-, Sulfonsäure-, Phosphorsäure-, Acryloxy-, Methacryloxy-, Epoxy- oder Vinylgruppen tragen können und m den Wert 1, 2 oder 3 hat, und/oder einem davon abgeleiteten Oligomeren, wobei der Rest R''' und/oder der Substituent ein vernetzbarer Rest bzw. Substituent sein muss, in einer Menge von 10 bis 95 Mol-%, bezogen auf die Gesamtmolzahl der (monomeren) Ausgangskomponenten;
   2. mindestens einer Metall Verbindung der allgemeinen Formel III:

      MeR_{y} (III)

      in welcher Me ein Metall, ausgewählt aus der Gruppe Al, Zr, Ti ist, wobei y im Falle von Aluminium 3 und im Falle von Ti und Zr 4 ist und die Reste R, die gleich oder verschieden sein können, Halogen, Alkyl, Alkoxy, Acyloxy oder Hydroxy bedeuten, wobei die soeben genannten Gruppen ganz oder teilweise durch Chelatliganden ersetzt sein können und /oder einem davon abgeleiteten Oligomeren und/oder einem gegebenenfalls komplexierten Aluminiumsalz einer anorganischen oder organischen Säure, in einer Menge von 5 bis 75 Mol-%, bezogen auf die Gesamtmolzahl der (monomeren) Ausgangskomponenten,
   3. gegebenenfalls mindestens einem nicht vernetzbaren organofunktionellen Silan der Formel I:

      R'ₘSiX₍₄₋ₘ₎ (I)

      in der die Gruppen X, die gleich oder verschieden sein können, Wasserstoff, Halogen, Hydroxy, Alkoxy, Acyloxy, Alkylcarbonyl, Alkoxycarbonyl oder -NR" ₂(R" = H und /oder Alkyl) bedeuten und die Reste R', die gleich oder verschieden sein können, Alkyl, Aryl, Arylalkyl oder Alkylaryl darstellen, wobei diese Reste durch O- oder S- Atome oder die Gruppe - NR" unterbrochen sein können und einen oder mehrere Substituenten aus der Gruppe der Halogene und der gegebenenfalls substituierten Amid-, Aldehyd-, Keto-, Alkylcarbonyl-, Carboxy-, Cyano-, Alkoxy-, Alkoxycarbonyl-Gruppen tragen können und m den Wert 1, 2 oder 3 hat, und/oder einem davon abgeleiteten Oligomeren, in einer Menge von 0 bis 60 Mol-%, bezogen auf die Gesamtmolzahl der (monomeren) Ausgangskomponenten und
   4. gegebenenfalls einem oder mehreren im Reaktionsmedium löslichen, schwerflüchtigen Oxid eines Elementes der Hauptgruppe Ia bis Va oder der Nebengruppen IIb, IIIb, Vb bis VIIIb des Periodensystems, mit Ausnahme von Al, und/oder einer oder mehrerer im Reaktionsmedium löslichen, unter den Reaktionsbedingungen ein schwerflüchtiges Oxid bildenden Verbindungen eines dieser Elemente, in einer Menge von 0 bis 70 Mol-%, bezogen auf die Gesamtmolzahl der (monomeren) Ausgangskomponenten;
   und
B) dass man zu diesem hydrolytischen Kondensat ein organisches Präpolymer zugibt, wobei die reagierenden vernetzbaren Gruppen des Restes R''' und/oder des vernetzbaren Substituenten am Rest R''' mit denen am Präpolymer vernetzbar sind, oder vorteilhaft gleichnamig sind, und das Präpolymer in einer Menge von 2 bis 70 Mol-%, bezogen auf die Gesamtmolzahl der (monomeren) Ausgangskomponenten, zusetzt;
C) die so erhaltene Beschichtungslösung auf ein Substrat, insbesondere auf den Reflektorkörper, resp. die darauf befindliche Vorbehandlungsschicht aufbringt und anschliessend aushärtet.
Weitere Angaben und Ausführungen zu den funktionellen Beschichtungen a) in Form eines Gel-Filmes können der EP-A 0 610 831 und der EP-A 0 358 011 entnommen werden.

Die genannten Silane können durch Verbindungen ersetzt werden, die anstelle des Siliciums Titan, Zirkon oder Aluminium enthalten. Damit kann die Härte, Dichte und Brechungsindex der funktionellen Beschichtung variiert werden. Die Härte der funktionellen Beschichtung kann ebenso durch die Verwendung verschiedener Silane gesteuert werden, beispielsweise durch Ausbildung eines anorganischen Netzwerkes zur Steuerung der Härte und thermischen Stabilität oder durch Verwendung eines organischen Netzwerkes zur Steuerung der Elastizität. Eine funktionelle Beschichtung, welche zwischen den anorganischen und organischen Polymeren eingeordnet werden kann, wird beispielsweise über den Sol-Gel-Prozess durch gezielte Hydrolyse und Kondensation von Alkoxiden, vorwiegend des Siliciums, Aluminiums, Titans und Zirkons auf den Aluminiumsubstraten aufgebracht werden. Durch den Prozess wird ein anorganisches Netzwerk aufgebaut und über entsprechend derivatisierte Kieselsäure-Ester können zusätzlich organische Gruppen eingebaut werden, die einerseits zur Funktionalisierung und andererseits zur Ausbildung definierter organischer Polymersysteme genutzt werden. Im weiteren kann der Gel-Film auch durch Elektro-Tauchlackierung nach dem Prinzip der kataphoretischen Abscheidung einer amin- und organisch modifizierten Keramik abgeschieden werden.

Die funktionellen Beschichtungen a), wie die genannten Silane oder die genannten Lacke, können durch Eintauchen, Aufpinseln, Aufwalzen, Schleudern, Spritzen, sogenanntes Coil-Coating usw. auf den Reflektorkörper direkt oder über eine Vorbehandlungsschicht aufgebracht werden.

Nach dem Beschichten der anodisierten Oberfläche des Reflektorkörpers mit der funktionellen Beschichtung a) kann die Beschichtung gehärtet werden. Das Härten kann durch Strahlung, wie UV-Strahlung, Elektronenstrahlung oder Laserstrahlung und/oder bei erhöhter Temperatur erfolgen. Die Temperatur kann durch Konvektion oder Wärmestrahlung, wie IR- und/oder UV-Strahlung, oder durch eine Kombination von Konvektion und Strahlung, wie UV- und/oder IR-Strahlung oder durch Heissgas, wie heisser Luft, erhöht werden. Die Temperatur, gemessen an der unter der funktionellen Beschichtung liegenden Schicht, z.B. der Metall-, wie Aluminiumschicht, ist beispielsweise grösser als 110° C, zweckmässig grösser als 150° C und vorzugsweise zwischen 150° C und 240° C. Für Klarlacke liegen diese Temperaturen beipielsweise häufig bei 230 bis 240° C. Die erhöhte Temperatur kann beispielsweise während 10 sec. bis 120 min. auf den Körper einwirken. Die Konvektionserwärmung kann zweckmässig durch eine Beaufschlagung mit erwärmten Gasen, wie Luft, Stickstoff, Edelgase oder Gemischen daraus, erfolgen.

Die funktionelle Beschichtung a) bewirkt eine Einebnung oder Glättung der Oberfläche. Es werden beispielsweise Werte Rₐ von kleiner als 0,01 µm und bevorzugt von kleiner als 0,02 µm erzielt. Die Oberflächenrauhigkeit Rₐ ist definiert in wenigstens einer der DIN-Vorschriften 4761 bis 4768.

Die funktionelle Beschichtung a) kann eine einzelne Schicht d.h. eine Monoschicht oder auch eine Mehrfachschicht, wie eine Doppelschicht, Dreifachschicht usw. darstellen. Die Mehrfachschichten, wie die Doppelschichten, resp. Dreifachschichten usw. können alle aus demselben Material oder aus unterschiedlichen Materialien, jeweils ausgewählt aus den zur funktionellen Beschichtungen a) genannten Materialien, angewendet werden. Die Doppelbeschichtung, Dreifachbeschichtung usw. kann erzeugt werden beispielsweise durch aufbringen einer ersten Schicht, vorhärten oder aushärten der ersten Schicht, aufbringen der zweiten Schicht und aushärten der zweiten Schicht. Eine nur vorgehärtete erste Schicht kann gleichzeitig mit der zweiten Schicht aushärten. Wird gegenbenfalls eine dritte Schicht aufgebracht, kann die erste und die zweite Schicht ausgehärtet oder vorgehärtet werden und die Aushärtung kann nur die dritte Schicht betreffen oder mit der dritten Schicht können -- soweit noch erforderlich -- die darunter liegenden Schichten ausgehärtet werden. Gleiches gilt sinngemäss für weitere, wie vierte usw. Schichten. Mit Vorhärten sind beispielsweise Verfahren, wie trocknen lassen, vortrocknen unter Wärme- oder Strahlungseinfluss oder Strahlungs- oder Hitzebehandlungen umfasst. Die zweckmässige Dicke einer Doppel- resp. Dreifachschicht liegt im oben angegebenen Bereich von 1 bis 20 µm, wobei jede einzeln aufgetragene Schicht beipielsweise eine Dicke von 2 bis 5 µm aufweisen kann.

Die Reflexionsschichtenfolge b) enthält eine reflektierende Schicht, wie z.B. eine Schicht aus Aluminium, Silber, Kupfer, Gold, Chrom, Nickel oder Legierungen, beispielsweise enthaltend überwiegend wenigstens eines der genannten Metalle. Die Dicke der Reflexionsschicht kann beispielsweise 10 bis 200 nm (Nanometer) betragen. Die reflektierende Schicht kommt in der Regel direkt, oder über eine Haftschicht, auf die funktionelle Beschichtung a) zu liegen.

Die Reflexionsschichtenfolge b) enthält weiters mehrere transparente Schichten. Die transparenten Schichten sind auf der reflektierenden Schicht aufgebracht. Beispielsweise 1, 2, 3, 4, 5, 6, 7, 8, 9 oder 10 transparente Schichten - gezählt ohne die Schutzschicht -- erfüllen vorteilhaft bezüglich der optischen Dicke für jede Schicht die Formel λ/2, wobei insbesondere jede dieser transparenten Schichten eine Doppelschicht aus jeweils 2 Schichten der Dicke λ/4 ist. Die optische Dicke jeder transparenten Schicht mit der Formel λ/2 kann um ± 40 nm variieren. Bevorzugt ist eine transparente Schicht oder weiter bevorzugt sind zwei, drei oder mehrere transparente Schichten, die aus gleichen oder unterschiedlichen Materialien sein können, wobei jede der transparenten Schichten eine optische Dicke von λ/2 ± 40 nm aufweist und insbesondere eine Doppelschicht der Dicke 2 • λ/4 ist. Auf die genannte transparente Schicht oder Schichten, als oberste Schicht, resp. als die an der Oberfläche liegende Schicht, wird die Schutzschicht, die ihrerseits auch transparent ist, angeordnet. λ entspricht dem Intensitätsmaximum der Wellenlänge der reflektierten elektromagnetischen Strahlung.

Die Materialien der transparenten Schichten bestehen aus oder enthalten z.B. Oxide, Nitride, Fluoride, Sulfide usw. von Alkalimetallen, z.B. Li, Na, K, Erdalkalimetallen, z.B. Mg, Ca, Sr, Ba, Halbmetallen, wie z.B. Si, Übergangsmetallen, z.B. Sc, Ti, V, Cr,Mn, Fe, Co, Ni, Y, Zr, Nb, Mo, Te, Ru,Rh, Pd, Hf, Ta, W, Re, Os, Ir ,Pt, Lanthanoiden, z.B. La, Ce, Pr, Nd, Pm, Dy, Yb, Lu usw. Es können namentlich genannt werden SiOₓ, wobei x die Bedeutung von 1,1 bis 2,0 und vorzugsweise 1,8 hat, Al₂O₃, MgF₂, TiO₂, B₂O₃, Be-Oxid, ZnO, SnO₂, Indium-Zinn-Oxid (ITO), CdS, CdTe und Hafnium- und Zirkon-Oxide. Vorteilhaft weisen wenigstens eine der transparenten Schichten, mit Ausnahme der Schutzschicht, andere Materialien auf, als die Schutzschicht selbst.

Es können eine, mehrere oder alle transparenten Schichten der optischen Dicke λ/2 ± 40 nm Doppelschichten aus jeweils zwei Schichten in einer optischen Dicke von λ/4 sein. Die Doppelschichten aus jeweils zwei Schichten in einer optischen Dicke von λ/4 sind vorteilhaft aus einer niedrigbrechenden Schicht der optischen Dicke λ/4 und einer hochbrechenden Schicht der optischen Dicke λ/4. Die Doppelschichten sind besonders vorteilhaft aus jeweils zwei Schichten, nämlich einer ersten und einer zweiten Schicht in einer optischen Dicke von je λ/4 und dabei aus einer niedrigbrechenden ersten Schicht der optischen Dicke λ/4 aus SiO₂ oder MgF₂ und einer hochbrechenden zweiten Schicht der optischen Dicke λ/4 aus Ti-Oxid oder Ti,Pr-Oxid.

Demnach können zur Verstärkung des Reflexionsgrades als Folge partieller Lichtreflexion an der Phasengrenze eine, zwei oder mehrere transparente Schichten der optischen Dicke λ /2 aus zwei transparenten Schichten in einer optischen Dicke von λ/4 aus Materialien mit unterschiedlichen Brechungsindizes erzeugt sein. Die einzelnen transparenten Schichten in einer optischen Dicke λ/4 sind typischerweise von 30 nm, vorzugsweise von 40 nm, bis 200 nm dick. Ein Beispiel einer transparenten Schicht der optischen Dicke λ/2 aus zwei Schichten der optischen Dicke λ/4, kann eine niedrigbrechende Schicht in der optischen Dicke λ/4 aus SiO2, MgF2 usw. und eine hochbrechende Schicht in der optischen Dicke λ/4 aus Ti-Oxid, Ti/Pr-Oxid, Tantal-Oxid usw. enthalten.

Bevorzugt sind auch Reflexionsschichtfolgen b) aus einer reflektierenden Schicht, darauf eine oder zwei transparente Schichten, jede dieser transparenten Schichten in Form von Doppelschichten λ/4 und somit in einer optischen Dicke λ/2, und einer Schutzschicht, die an der Oberfläche der transparenten Schichten anliegt, und aus einem Siliciumoxid der allgemeinen Formel SiOₓ, wobei x eine Zahl von 1,1 bis 2,0 ist, oder aus Aluminiumoxid, wobei die Dicke der Schutzschicht 3 nm oder grösser ist.

Bevorzugt sind auch Reflexionsschichtfolgen aus einer reflektierenden Schicht, darauf eine transparente Schicht in einer optischen Dicke λ/4 mit niedrigem Brechungsindex und darauf eine transparente Schicht in einer optischen Dicke λ/4 mit hohem Brechungsindex und eine Schutzschicht, die an der Oberfläche liegt, aus einem Siliciumoxid der allgemeinen Formel SiOₓ, wobei x eine Zahl von 1,1 bis 2,0 ist, oder Aluminiumoxid, in einer Dicke von 3 nm oder grösser. Eine noch höhere Reflexion kann mit mehreren Doppelschichten 2 • λ/4, alternierend mit niedrigerem und höherem Brechungsindex, erreicht werden.

Vorliegende Erfindung umfasst demnach Reflektoren, enthaltend den Reflektorkörper, fallweise darauf eine Vorbehandlungsschicht, die auf dem Reflektorkörper aufgebracht oder oberflächlich aus dem Reflektorkörper selbst gebildetet ist, darauf aufgebracht die funktionelle Beschichtung und darauf aufgebracht die Reflexionsschichtenfolge. Die Reflexionsschichtenfolge ihrerseits weist die reflektierende Schicht auf, die in der Regel auf der funktionellen Schicht aufliegt. In einer Ausführungsform können auf der reflektierenden Schicht eine oder mehrere transparente Schichten der optischen Dicke λ/2 aufliegen, die ihrerseits mit der Schutzschicht abgedeckt sind. Die mit Schutzschicht bezeichnete Schicht stellt demnach immer die an einem Reflektor aussenliegende, freie, mechanischen Einflüssen unmittelbar ausgesetzte Schicht dar.

Alle oder einzelne Schichten der Reflexionsschichtenfolge b) können beispielsweise durch Gas- oder Dampfphasenabscheidung im Vakuum, (physical vapor deposition, PVD), durch thermische Verdampfung, durch Elektronenstrahlverdampfung, mit und ohne Ionenunterstützung, durch Sputtern, insbesondere durch Magnetronsputtering, durch Plasmapolymerisation oder durch chemische Gasphasenabscheidung (chemical vapor deposition, CVD) mit und ohne Plasmaunterstützung, auf den Reflektorkörper, resp. auf eine darauf befindliche Vorbehandlungsschicht, aufgebracht werden. Andere Auftragungsverfahren sind Lackier- oder Tauchziehverfahren von im Sol-Gel-Prozess hergestellten Lösungen mit anschliessender Trocknung, flammpyrolytische Verfahren oder Flammbeschichtung mittels SiO₂. Es können auch zwei oder mehrere Verfahren kombiniert werden. Es können z.B. PVD-Schichten durch eine Flammbeschichtung mit SiO₂ ergänzt werden.

Die reflektierende Schicht resp. die Reflexionsschichtenfolge kann beispielsweise in einer Prozessfolge auf die Oberfläche gebracht werden, welche -- fallweise die Schritte der Entfettung und Reinigung --, das Einschleusen des die zu beschichtende Oberfläche enthaltenden Gegenstandes in eine Vakuumanlage, das Reinigen beispielsweise durch Sputtern, durch Entladung (glow discharge) etc., in erster Stufe die Abscheidung einer lichtreflektierenden und insbesondere metallischen Schicht, und zweiter Stufe die Abscheidung einer transparenten Schicht und gegebenenfalls in dritter, vierter usw. Stufen, die Abscheidung einer zweiten, dritten usw. transparenten Schicht und des Ausschleusens des beschichteten Gegenstandes aus dem Vakuum enthält.

Die reflektierende Schicht kann auch nach einem elekrolytischen oder nasschemischem Verfahren erzeugt werden. Die transparenten Schichten und dabei insbesondere die Schutzschicht, können als Gel-Filme vorliegen, die durch ein Sol-Gel Verfahren erzeugt werden. Die transparenten Schichten und dabei insbesondere die Schutzschicht, können auch flammpyrolytisch erzeut werden. Es ist auch möglich, unterschiedliche Verfahren für die einzelnen Schichten einer Schichtenfolge anzuwenden.

Beispielsweise bei Walzprodukten, wie Folien, Bändern oder Blechen, oder bei Laminaten mit einer Aluminiumschicht, werden einzelne oder vorzugsweise alle Beschichtungen in kontinuierlichen Verfahren, in der Regel sogenannten Band- oder Durchlaufverfahren, auch coil-coating genannt, aufgetragen, resp. abgeschieden. Für die Erzeugung der Vorbehandlungsschicht können beispielsweise die Verfahren zur anodischen Oxidation von Aluminium angewendet werden. Auch die funktionelle Beschichtung a), z.B. eine Sol-Gel-Schicht, kann in kontinuierlichen Verfahren aufgetragen werden, wobei das Sol durch Tauchen, Spritzen etc. oder im sogenannten Coil-Coating auf die zu behandelnde Oberfläche aufgetragen wird und durch anschliessende Strahlungs- und/oder Wärmebehandlung im Durchlaufofen getrocknet resp. gehärtet wird. Schliesslich kann die Reflexionsschichtenfolge b) durch Bedampfen, Sputtern etc., jeweils insbesondere im Vakuum, usw., abgeschieden werden.

Die Reflexionsschichtenfolge b) auf dem Reflektorkörper, dient insbesondere zur Reflexion von elektromagnetischer Strahlung oder Energie in Form von Wellen und/oder Teilchen, zweckmässig zur Reflexion der Strahlung, mit Wellenlängen im optischen Bereich und vorzugsweise des sichtbaren Lichtes, insbesondere mit Wellenlängen zwischen 400 bis 750 nm.

Die erfindungsgemässen Reflektoren mit Oberflächen, die eine erfindungsgemässe Reflexionsschichtenfolge tragen, weisen eine hervorragende Reflexion, beispielsweise für elektromagnetische Strahlung und insbesondere elektromagnetische Strahlung im optischen Bereich, auf. Der optische Bereich umfasst z.B. Infrarot, den Bereich des sichtbaren Lichtes, des Ultravioletts usw. Bevorzugtes Anwendungsgebiet ist der Bereich der elektromagnetischen Strahlung und dabei des sichtbaren Lichtes.

Die Reflexion der Strahlung kann je nach Oberfläche gerichtet, gestreut oder eine Kombination davon sein. Demgemäss eignen sich die Reflektoren nach vorliegender Erfindung beispielsweise als Reflektoren, wie Reflektoren z.B. für Strahlungsquellen oder optische Geräte. Solche Strahlungsquellen sind z.B. Beleuchtungskörper, wie Bildschirmarbeitsplatz-Leuchten, Primärleuchten, Sekundärleuchten, Rasterleuchten, Lichtleitelemente, Lichtdecken, Lichtumlenklamellen oder Wärmestrahler. Die Reflektoren können z.B. auch Spiegel oder Innenspiegel von optischen Geräten, Beleuchtungskörpern oder Wärmestrahlern sein.

Die Reflexionsschichtenfolge b) auf dem Reflektionskörper führt insbesondere zu Reflektoren, deren beschichtete Oberflächen eine Gesamtreflexion, gemessen als Reflexionswert nach DIN 5036, von zweckmässig 90% und höher, und insbesondere von 94% bis 96% und höher aufweisen.

Die Reflektoren nach vorliegender Erfindung weisen z.B. eine überragende Wischfestigkeit und auch Härte auf. Die Wischfestigkeit kann bestimmt werden nach DIN 58196. Zusammendfassend wird nach vorliegender Norm DIN 58196 eine Probe mit einem filzbezogenen Stempel mit der Auflagekraft von 4,5N (entsprechend ca. 450 g) über eine Wischstrecke von 120 mm mit 100 Hüben innerhalb 74 Sekunden (1,3 Hz) geprüft. Der Testzyklus wird 20, 50 und 80 mal wiederholt und die Proben danach jeweils bewertet. Auf einer Bewertungsskala von 1 bis 5 bedeutet die Note 1 keine Beschädigung der Oberfläche, 2 bedeutet Abriebspuren sind erkennbar bei spezieller Betrachtung im Lichtkasten, 3 bedeutet Abriebspuren sind erkennbar bei Betrachtung mit Tageslicht, 4 bedeutet starke Abriebspuren über die ganze Fläche und 5 bedeutet sehr starke Abriebspuren über die ganze Fläche sind sichtbar. Die Reflektoren, beispielsweise in Form von Folien, Bändern oder Blechen, lassen sich auch umformen, wobei kaum Rissbildung sichtbar wird. Die Reflektoren nach der Erfindung weisen eine gute Schutzwirkung gegen mechanischen Abbau, wie mechanische Beschädigung, z.B. Ritzhärte, oder Abrieb und dabei insbesondere eine hohe Wischbeständigkeit auf. Mechanische Beschädigungen können beispielsweise bei der Reinigung von Oberflächen, d.h. den reflektierenden Schichten, durch Staub, Sand und dergleichen, der zwischen dem Reinigungsgerät und der Oberfläche eingeschlossen ist oder durch das Reinigungsgerät selbst, wie einen Lappen, Wischer, Bürste etc., erfolgen.

Vorliegende Erfindung umfasst auch die Verwendung von Reflektoren enthaltend eine gegen mechanische Angriffe resistente Oberfläche mit hoher Gesamtreflexion zur Reflexion von Strahlungen im optischen Bereich, d.h. von Tages- und Kunstlicht, von Wärmestrahlung, von sichtbarem Licht, Ultraviolettlicht etc. Besondere Bedeutung hat die Verwendung der Reflektoren für die Reflexion von sichtbarem Licht, insbesondere von Tages- oder Kunstlicht, einschliesslich UV-Licht. Die erfindungsgemässsen Reflektoren sind beispielsweise geeignet als Reflektoren oder Lichtleitelemente in der Licht- und Leuchtentechnik, wie z.B. als Reflektoren in Bildschirmarbeitsplatz-Leuchten, Primärleuchten, Sekundärleuchten, Rasterleuchten, Lichtleitelemente, Lichtdecken oder als Lichtumlenklamellen usw.

### Beispiele

Verschiedene Versuchsmuster aus Aluminium oder dessen Legierungen werden teilweise durch eine Anodisierung vorbehandelt, teilweise lediglich entfettet, und anschliessend mit einem Lack beschichtet. Auf die Lackschicht wird durch ein PVD-Verfahren eine Reflexionsschichtenfolge aufgebracht. Die Reflexionsschichtenfolge besteht nacheinander aus der reflektierenden Aluminiumschicht in einer Dicke von 50 nm und darauf abgeschieden zuerst einer Siliciumoxid-Schicht in einer optischen Dicke von λ/4 und danach einer Titanoxid-Schicht in einer optischen Dicke von λ/4. Erfindungsgemäss wird die Schutzschicht in Form einer 5 bis 10 nm dicken SiO₂-Schicht durch ein weiteres PVD-Verfahren als äusserste Schicht aufgebracht. Bei den Vergleichsbeispielen fehlt jeweils die Schutzschicht. Alle Muster werden dem Wischtest nach DIN 58196 unterworfen und es wird die Wischfestigkeit der Muster beurteilt. Die erfindungsgemässen Muster werden jeweils nach 50 Testzyklen zu 100 Wischhüben benotet. Die Vergleichsmuster fallen in der Wischfestigkeit derart ab, dass die Anzahl Testzyklen angegeben wird, nach denen eine schlechte Benotung von 3 oder höher bis maximal 5 erreicht wird. Die Versuchsanordnung und die Testwerte sind in nachfolgender Tabelle festgehalten.

Es ist aus der nachfolgenden Tabelle erkennbar, dass die Schutzschicht zu einer erheblichen Verbesserung der Wischfestigkeit führt. Nach Testabbruch bei 50 Testzyklen zu jeweils 100 Hüben zeigen alle Testmuster nach der Erfindung eine noch unbeschädigte Oberfläche mit der Benotung 1. Die Vergleichsmuster dagegen fallen bezüglich der Wischfestigkeit deutlich ab und bereits nach weniger als 10, resp. 20 Testzyklen, werden die Muster derart beschädigt, dass die Note 3 oder schlechter erreicht ist.

**Tabelle:**

| Muster-Nr. | Substrat | Vorbehandlung | Lack | Reflexionsschichtenfolge | Schutzschicht | Wischtest: Anzahl Testzyklen = Note |
|---|---|---|---|---|---|---|
| 1 | A199,7 | anodisiert | Sol-Gel ¹⁾ | Al/SiO₂/TiO₂ | SiO₂ | 50x = 1 |
| Vergleich 1 | A199,7 | anodisiert | Sol-Gel ¹⁾ | Al/SiO₂/TiO₂ | ohne | kleiner 10x |
| 2 | A199,9 | entfettet | Sol-Gel ¹⁾ | Al/SiO₂/TiO₂ | SiO₂ | 50x = 1 |
| Vergleich 2 | A199,9 | entfettet | Sol-Gel ¹⁾ | Al/SiO₂/TiO₂ | ohne | kleiner 20x |
| 3 | AlMgCu | entfettet | SiO₂/TiO₂ Sol/Gel-Mischung | Al/SiO₂/TiO₂ | SiO₂ | 50x = 1 |
| Vergleich 3 | AlMgCu | entfettet | SiO₂/TiO₂ Sol/Gel-Mischung | Al/SiO₂/TiO₂ | ohne | kleiner 10x |
| 4 | AlMg | entfettet | Sol/Gel auf Polysiloxanbasis | Al/SiO₂/TiO₂ | SiO₂ | 50x = 1 |
| Vergleich 4 | AlMg | entfettet | Sol/Gel auf Polysiloxanbasis | Al/SiO₂/TiO₂ | ohne | kleiner 20x |
| 5 | A199,7 | Sperrschicht 150 nm Al₂O₃ | Sol-Gel ¹⁾ | Al/SiO₂/TiO₂ | SiO₂ | 50x = 1 |
| Vergleich 5 | A199,7 | Sperrschicht 150 nm Al₂O₃ | Sol-Gel¹⁾ | Al/SiO₂/TiO₂ | ohne | kleiner 20x |

| | | | | | | |
|---|---|---|---|---|---|---|
| ¹⁾ Mit organischem Anteil | | | | | | |

## Patentansprüche

1. Gegen mechanische Angriffe resistenter Reflektor mit hoher Gesamtreflexion, enthaltend einen Reflektorkörper und darauf, übereinander angeordnet,
a) einer funktionellen Beschichtung und
b) einer Reflexionsschichtenfolge, enthaltend eine reflektierende Schicht und mehrere transparente Schichten,
und eine Schutzschicht, als an der Oberfläche liegende Schicht, aus Siliciumdioxid oder Aluminiumoxid, und die Schutzschicht im Wischtest nach DIN 58196 nach 50 Testzyklen mit jeweils 100 Wischhüben keine Beschädigung der Oberfläche zeigt,
**dadurch gekennzeichnet dass**,
die funktionelle Beschichtung a) ein Gel-Film, der nach einem Sol-Gel-Verfahren aufgetragen worden ist und der Gel-Film eine Beschichtung mit organofunktionellen Silanen einer Metallverbindung ist, oder, im Falle eines Reflektorkörpers aus Aluminium, die funktionelle Beschichtung auch eine durch anodische Oxidation gebildete Aluminiumoxidschicht ist,
und
die Reflexionsschichtenfolge aus einer metallischen reflektierenden Schicht, darauf angeordnet 1, 2, 3, 4, 5, 6, 7, 8, 9 oder 10 transparenten Schichten der optischen Dicke λ/2 ± 40 nm, wobei die transparenten Schichten Doppelschichten aus jeweils zwei Schichten in einer Dicke von λ/4 sind, und darauf angeordnet einer Schutzschicht, in Form einer Schicht aus einem Siliciumoxid der allgemeinen Formel SiOₓ, wobei x eine Zahl von 1,1 bis 2,0 ist, oder einem Aluminiumoxid, die Schutzschicht in einer Dicke von 3 nm oder grösser, besteht,
und
die Reflexionsschichtenfolge ein Siliciumoxid der allgemeinen Formel SiOₓ, wobei x eine Zahl von 1,1 bis 2,0 ist, oder Aluminiumoxid der Formel Al₂O₃, in einer Dicke von 3 nm oder grösser, als Schutzschicht enthält und die Schutzschicht als an der Oberfläche liegende Schicht, die darunter liegenden Schichten gegen mechanische Beschädigungen schützt.

2. Reflektor nach Anspruch 1, **dadurch gekennzeichnet, dass** die maximale Dicke der Schutzschicht 400 nm und bevorzugt 40 nm und weniger, beträgt.

3. Reflektor nach Anspruch 1, **dadurch gekennzeichnet, dass** die Dicke der Schutzschicht 3 bis 20 nm beträgt.

4. Reflektor nach Anspruch 1, **dadurch gekennzeichnet, dass** die Dicke der Schutzschicht der optischen Dicke mit der Formel λ/2 ± 40nm entspricht, wobei λ/2 = n • d ist und dem Intensitätsmaximum der Wellenlänge der reflextierten elektromagnetischen Strahlung entspricht, n der Brechungsindex und d die geometrische Dicke der Schicht sind.

5. Reflektor nach Anspruch 1, **dadurch gekennzeichnet, dass** die Schutzschicht ein Siliciumoxid der allgemeinen Formel SiOₓ, wobei x eine Zahl von 1,1 bis 2,0, zweckmässig von 1,8, ist.

6. Reflektor nach Anspruch 1, **dadurch gekennzeichnet, dass** die Schutzschicht ein bei einem Sol-Gel Verfahren abgeschiedener Gel-Film oder ein aus dem Vakuum oder im Plasma abgeschiedener Dünnfilm oder ein flammpyrolytisch erzeugter Film ist.

7. Reflektor nach Anspruch 1, **dadurch gekennzeichnet, dass** die Doppelschichten aus jeweils zwei Schichten in einer Dicke von λ/4 sind und aus einer niedrigbrechenden Schicht der Dicke λ/4 und einer hochbrechenden Schicht λ/4 bestehen.

8. Reflektor nach Anspruch 1, **dadurch gekennzeichnet, dass** die Doppelschichten aus jeweils zwei Schichten in einer Dicke von λ/4 sind und aus einer niedrigbrechenden Schicht der Dicke λ/4 enthaltend oder bestehend aus SiO₂ oder MgF₂ und einer hochbrechenden Schicht λ/4 enthaltend oder bestehend aus Titan-Oxid, Ti,Pr-Oxid oder Tantal-Oxid sind.

9. Verwendung der Reflektoren nach Anspruch 1 als Reflektoren oder Lichtleitelemente für Kunstlicht und Tageslicht.

10. Verwendung der Reflektoren nach Anspruch 9 in der Licht- und Leuchtentechnik als Reflektoren in Bildschirmarbeitsplatz-Leuchten, Primärleuchten, Sekundärleuchten, Rasterleuchten, Lichtdecken oder als Lichtumlenklamellen.

## Claims

1. Reflector with high total reflection resistant to mechanical attack, containing a reflector body and, arranged successively thereon,
a) a functional coating and
b) a sequence of reflective layers, containing a reflecting layer and several transparent layers,
and a protective layer as a layer lying on the surface made of silicon dioxide or aluminium oxide, the protective layer displaying no surface damage in the abrasion test according to DIN 58196 after 50 test cycles each of 100 strokes,
**characterised in that**
the functional coating a) is a gel film applied by means of a sol-gel process and the gel film is a coating with organofunctional silanes of a metal compound or, in the case of a reflector body made of aluminium, the functional coating is also an aluminium oxide layer formed by anodic oxidation,
and
the sequence of reflective layers consists of a metal reflecting layer, then 1, 2, 3, 4, 5, 6, 7, 8, 9 or 10 transparent layers having an optical thickness of λ/2 ± 40 nm arranged thereon, the transparent layers being double layers each consisting of two layers having a thickness of λ/4, and a protective layer in the form of a layer of a silicon dioxide of general formula SiOₓ, where x is a number from 1.1 to 2.0, or an aluminium oxide, arranged thereon, the protective layer having a thickness of 3 nm or more,
and
the sequence of reflective layers contains a silicon dioxide of general formula SiOₓ, where x is a number from 1.1 to 2.0, or aluminium oxide of the formula Al₂O₃ having a thickness of 3 nm or more as the protective layer and the protective layer as the layer lying on the surface protects the underlying layers against mechanical damage.

2. Reflector according to claim 1, **characterised in that** the maximum thickness of the protective layer is 400 nm and preferably 40 nm or less.

3. Reflector according to claim 1, **characterised in that** the thickness of the protective layer is 3 to 20 nm.

4. Reflector according to claim 1, **characterised in that** the thickness of the protective layer corresponds to the optical thickness having the formula λ/2 ± 40 nm, where λ/2 = n • d, λ corresponds to the intensity maximum of the wavelength of the reflected electromagnetic radiation, n is the refractive index and d is the geometrical thickness of the layer.

5. Reflector according to claim 1, **characterised in that** the protective layer is a silicon dioxide of general formula SiOₓ, where x is a number from 1.1 to 2.0, advantageously 1.8.

6. Reflector according to claim 1, **characterised in that** the protective layer c) is a gel film deposited by a sol-gel process or a thin film deposited in vacuo or in plasma or a film produced by flame pyrolysis.

7. Reflector according to claim 1, **characterised in that** the double layers each consist of two layers having a thickness of λ/4 and of a low-refractive-index layer having a thickness of λ/4 and a high-refractive-index λ/4 layer.

8. Reflector according to claim 1, **characterised in that** the double layers each consist of two layers having a thickness of λ/4 and of a low-refractive-index layer having a thickness of λ/4 containing or consisting of SiO₂ or MgF2 and a high-refractive-index λ/4 layer containing or consisting of titanium oxide, Ti,Pr-oxide or tantalum oxide.

9. Use of the reflectors according to claim 1 as reflectors or light-conducting elements for artificial light and daylight.

10. Use of the reflectors according to claim 9 in lighting engineering and light production engineering as reflectors in terminal workstation luminaires, primary luminaires, secondary luminaires, louvred luminaires, luminous ceilings or as light deflectors.

## Revendications

1. Réflecteur résistant à l'attaque mécanique, avec une réflexion globale élevée, contenant un corps de réflecteur et disposé sur celui-ci, successivement,
c) un revêtement fonctionnel, et
d) une succession de couches de réflexion, contenant une couche réfléchissante et plusieurs couches transparentes,
et une couche de protection, en tant que couche présente sur la surface, en dioxyde de silicium ou oxyde d'aluminium, et la couche de protection présente dans le test à l'essuyage selon DIN 58196, après 50 cycles de test avec chaque fois 100 courses d'essuyage, aucune détérioration de la surface, **caractérisée en ce que**, le revêtement fonctionnel a) est un gel-film, qui est appliqué selon le procédé sol-gel et que le gel-film est un revêtement avec des silanes organofonctionnels d'un composé métallique, ou dans le cas d'un corps de réflecteur en aluminium, le revêtement fonctionnel est également une couche d'oxyde d'aluminium formée par oxydation anodique, et la succession de couches de réflexion consiste en une couche réfléchissante mécanique, 1, 2, 3, 4, 5, 6, 7, 8, 9 ou 10 couches transparentes disposées sur celle-ci, d'épaisseur optique λ/2 ± 40 nm, où les couches transparentes sont des couches doubles de chaque fois deux couches d'une épaisseur de λ/4, et disposée sur celles-ci, une couche protectrice sous la forme d'une couche en oxyde de silicium de la formule générale SiOₓ, où x est un nombre allant de 1,1 à 2,0, ou une couche d'oxyde d'aluminium, la couche de protection ayant une épaisseur de 3 nm ou davantage, et la succession de couches de réflexion contient une couche d'oxyde de silicium de la formule générale SiOₓ, où x est un nombre allant de 1,1 à 2,0, ou d'oxyde d'aluminium de la formule Al₂O₃, ayant une épaisseur de 3 nm ou davantage, comme couche protectrice et la couche de protection en tant que couche située sur la surface, protège les couches situées en dessous contre la détérioration mécanique.

2. Réflecteur selon la revendication 1, **caractérisé en ce que** l'épaisseur maximale de la couche de protection s'élève à 400 nm et de préférence, à 40 nm et moins.

3. Réflecteur selon la revendication 1, **caractérisé en ce que** l'épaisseur de la couche de protection s'élève de 3 à 20 nm.

4. Réflecteur selon la revendication 1, **caractérisé en ce que** l'épaisseur de la couche de protection correspond à une épaisseur optique de la formule λ/2 ± 40 nm, où λ/2 = n x d et λ correspond au maximum d'intensité de la longueur d'onde du rayonnement électromagnétique réfléchi, n est l'indice de réfraction et d est l'épaisseur géométrique de la couche.

5. Réflecteur selon la revendication 1, **caractérisé en ce que** la couche de protection est un oxyde de silicium de la formule générale SiOₓ, où x est un nombre allant de 1,1 à 2,0, et de manière avantageuse 1,8.

6. Réflecteur selon la revendication 1, **caractérisé en ce que** la couche de protection est un gel-film déposé par un procédé sol-gel ou un film fin déposé sous vide ou dans un plasma ou un film produit de manière pyrolytique à la flamme.

7. Réflecteur selon la revendication 1, **caractérisé en ce que** les couches doubles sont chaque fois deux couches ayant une épaisseur de λ/4 et consistent en une couche de faible réfraction d'épaisseur λ/4 et en une couche de réfraction élevée de λ/4.

8. Réflecteur selon la revendication 1, **caractérisé en ce que** les couches doubles sont chaque fois deux couches d'une épaisseur de λ/4 et sont une couche de faible réfraction d'épaisseur λ/4, contenant ou consistant en SiO₂ ou MgF₂, et une couche de réfraction élevée de λ/4, contenant ou consistant en de l'oxyde de titane, de l'oxyde de T, Pr ou de l'oxyde de tantale.

9. Utilisation des réflecteurs selon la revendication 1, comme réflecteurs ou éléments conduisant la lumière pour la lumière artificielle et la lumière du jour.

10. Utilisation des réflecteurs selon la revendication 9, dans la technique de la lumière et des appareils lumineux, comme réflecteurs dans les appareils lumineux pour écrans vidéos, l'éclairage direct, l'éclairage indirect, l'éclairage à balayage, les couvercles de luminaire ou comme lamelle de diffusion de la lumière.
